# EUROPÄISCHE PATENTSCHRIFT

(11) **EP 1 993 861 B1**
(45) Veröffentlichungstag und Bekanntmachung des Hinweises auf die Patenterteilung: **02.06.2010**
(21) Anmeldenummer: 07726496.8
(22) Anmeldetag: 26.02.2007
(51) Int. Cl.: B60G 17/019, B60G 17/0165, B60G 17/0195, B60C 23/00, B60K 31/00, B60Q 1/10, B60T 8/00

(54) **SYSTEM ZUR LAGEREGULIERUNG DES FAHRWERKS EINES KRAFTFAHRZEUGS**
SYSTEM FOR REGULATING THE POSITION OF THE CHASSIS OF A MOTOR VEHICLE
Système de régulation de la position du train roulant d'un véhicule automobile

(30) Priorität: 06.03.2006 DE 102006010101
(43) Veröffentlichungstag der Anmeldung: 26.11.2008
(73) Patentinhaber: Robert Bosch GmbH, 70442 Stuttgart (DE)
(72) Erfinder: VOIGTLAENDER, Klaus, 73117 Wangen (DE); JAKUBOWSKI, Lars, 74232 Abstatt (DE)
(86) Internationale Anmeldenummer: PCT/EP2007/051786
(87) Internationale Veröffentlichungsnummer: WO 2007/101796

(56) Entgegenhaltungen:
- EP-A- 1 437 276
- EP-B1- 0 389 501
- DE-A1- 10 157 426
- DE-A1- 19 923 484
- JP-A- 60 142 208
- LU-A1- 90 903
- US-A- 3 859 660
- US-E1- R E37 725

## Beschreibung

### Stand der Technik

Die Erfindung bezieht sich auf ein System zur Lageregulierung des Fahrwerks eines Kraftfahrzeugs nach dem Oberbegriff des Anspruches 1.

In der DE 40 39 629 C2 wird ein System zur Steuerung bzw. Regelung eines Fahrwerkes eines Kraftfahrzeugs mit veränderlich einstellbaren Feder-/Dämpfungssystemen zwischen den Fahrzeugrädern und dem Fahrzeugaufbau beschrieben. Die Relativbewegungen zwischen den Rädern und dem Fahrzeugaufbau werden sensorisch erfasst, ebenso die Längs- und Querbewegungen des Fahrzeuges, wobei die ermittelten Sensorsignale unter Berücksichtigung von Fahrzeugkenngrößen und -parametern in Aufbaubewegungen umgerechnet werden, die einen stationären und einen instationären Anteil enthalten. Als Funktion der berechneten Aufbaubewegung wird die Dämpfungscharakteristik im Feder-/Dämpfungssystem verstellt, wodurch den Aufbaubewegungen wie Hub-, Wank- oder Nickbewegungen entgegengewirkt werden kann.

Zur Realisierung dieses Steuerungs- oder Regelungssystems sind an jedem Federbein mehrere Sensoren für die Ermittlung der verschiedenen Bewegungszustände des Aufbaus erforderlich. Der Einsatz verschiedener Sensoren, die sich gegebenenfalls auch im Sensortyp unterscheiden können, beispielsweise beim Einsatz Weg messende, Winkel messender oder Kraft messender Sensoren, stellt ein verhältnismäßig komplexes System dar, das einen hohen Hardware- und Softwareaufwand erfordert.

Aus der EP 0 389 501 B1 ist ein Verfahren zum Erkennen des Zustandes einer Straße bekannt. Dieses erkennt insbesondere Unebenheiten an der Oberfläche und am Rande der Straße und deren Entfernung zu einem Fahrzeug mit Hilfe elektromagnetischer Strahlung, wie Licht, die ein Sender als Impulse unter verschiedenen Neigungswinkeln zur Fahrbahn aussendet. Ein Empfänger empfängt reflektierte Impulse und setzt diese in Signale um, welche einer Signalverarbeitungs- und Auswerteeinheit zugeführt werden, wobei
- der/die Sender Impulse auch in variierbaren Winkeln zur Fahrbahnrichtung , d.h. im Azimut, zeitlich getaktet bzw. getastet als Sendekeulen auf unterschiedliche Bereiche der Straßenoberfläche und deren Rand aussendet und
- der Empfänger zur Profilaufzeichnung von den angestrahlten Bereichen zurückgestreute Impulse empfängt und in zeitlich aufeinanderfolgenden Abschnitten erfasst und in der Signalverarbeitungs- und Auswerteeinheit je nach Entfernung zum Fahrzeug erkennt, zusammensetzt und aufzeichnet.

Aus der LU 90 903 A1 ist ein System zur Lageregulierung des Fahrwerks eines Kraftfahrzeugs bekannt, mit an dem Fahrwerk angeordneten Aktuatoren, die über Stellsignale einer Regel- und Steuereinheit einzustellen sind, mit einem Abstandssensor zur Erfassung der Position des Fahrwerks, wobei eine Einstellung eines Aktuators durchführbar ist, falls die gemessenen Sensorsignale des Abstandssensors von vorgegebenen Sollwerten abweichen, wobei an zwei beabstandeten Positionen jeweils eine Weg messende Sensoranordnung mit einem berührungslos arbeitenden Abstandssensor angeordnet ist, und über jeden Abstandssensor zumindest zwei Wegmessungen in verschiedene Richtungen durchführbar sind.

### Aufgabe und Vorteile der Erfindung

Der Erfindung liegt die Aufgabe zugrunde, mit einfachen Maßnahmen ein System zur Lageregulierung des Fahrwerks eines Kraftfahrzeugs zu schaffen, das sich ohne Verlust von Informationen durch eine reduzierte Komplexität auszeichnet.

Diese Aufgabe wird erfindungsgemäß mit den Merkmalen des Anspruches 1 gelöst. Die Unteransprüche geben zweckmäßige Weiterbildungen an.

Das erfindungsgemäße System zur Lageregulierung des Fahrwerks eines Kraftfahrzeugs umfasst an der Fahrzeugunterseite mindestens drei beabstandete Sensoranordnungen mit jeweils einem berührungslos arbeitenden Abstandssensor, der in der Lage ist, zumindest zwei Wegmessungen in unterschiedliche Richtungen durchzuführen. Erreicht wird dies vorzugsweise mithilfe einer jedem Abstandssensor jeweils zugeordneten Sende-/Empfangseinheit und einem Strahlteiler zur Erzeugung von mindestens zwei zueinander einen Winkel einschließenden Abtaststrahlen. In der Sende-/Empfangseinheit wird zunächst ein Sensorstrahl erzeugt, der in dem nachgeschalteten Strahlteiler in mindestens zwei zueinander einen Winkel einschließende Abtaststrahlen aufgeteilt wird. Diese beiden Abtaststrahlen weisen in verschiedene Richtungen und sind demzufolge in der Lage, unterschiedliche Abstände zwischen dem Ort der Sensoranordnung und einem Fahrzeugbauteil oder der Umgebung zu messen, auf den der betreffende Abtaststrahl auftrifft. Als Strahlteiler kann ein Phasensteuerglied oder eine Linsengeometrie eingesetzt werden. Die Abstrahlrichtung kann auch zeitlich gestaffelt geschaltet werden.

Der Vorteil dieser Ausführung liegt in der Verwendung eines einheitlichen Sensorsystems, da die mindestens drei zueinander beabstandeten Sensoranordnungen untereinander gleichartig aufgebaut sind, wodurch zusätzlich zur Kosteneinsparung aufgrund der Gleichteilverwendung auch eine verbesserte Zuverlässigkeit und ein geringeres Maß an Komplexität sowohl im Hinblick auf die Hardware als auch die Software erreicht wird. Die Fehlereinflussmöglichkeiten sind reduziert, außerdem können Gewicht und elektrischer Energiebedarf herabgesetzt werden.

Die Messung erfolgt berührungslos mit jeweils nur einer Sensoranordnung, über die zumindest zwei unterschiedliche Wegmessungen durchführbar sind. Alternativ zu dem oben genannten Konzept der Strahlteilung ist es auch möglich, den flächigen oder räumlichen Strahlbereich der Sende-/Empfangseinheit für die Durchführung von mindestens zwei Messungen in verschiedene Messrichtungen auszunutzen, was dadurch erfolgen kann, dass innerhalb des beispielhaft als Keule oder Kegel ausgebildeten Strahlbereiches bestimmte Messrichtungen ausgewählt werden. Hierdurch ergeben sich im Prinzip die gleichen Vorteile wie bei Verwendung eines Strahlteilers.

Vorteilhaft sind pro Abstandssensor zumindest zwei Wegmessungen, insbesondere aber drei Wegmessungen durchführbar. Bei diesen Wegmessungen handelt es sich beispielsweise um den Abstand zwischen dem Fahrwerk und dem Boden, um den Abstand zwischen dem Fahrwerk und einer Radfelge und/oder um den Abstand zwischen dem Fahrwerk und einem vor dem Abstandssensor liegenden Hindernis, wobei beliebige Kombinationen von zwei der drei vorgenannten Abstandsmessungen oder auch alle drei vorgenannten Abstandsmessungen durchgeführt werden können. Die Aktuatoren zur Lageregulierung des Fahrwerks - in Frage kommt insbesondere eine Lageregelung, gegebenenfalls aber auch eine Lagesteuerung - werden aktiviert, falls zwischen mindestens einem Messwert der Sensorsignale eine Differenz zum vorgegebenen Sollwert vorliegt. Grundsätzlich kann die Lageregulierung quasistatisch erfolgen, also unter gegebenen Lastbedingungen als einmalige Anpassung durchgeführt werden, oder dynamisch erfolgen, beispielsweise bei Kurvenfahrt oder bei Fahrt über Unebenheiten dynamisch an den jeweiligen Fahrzustand adaptiert werden, was insbesondere durch adaptive Feder-/Dämpfersysteme wie z. B. Sky-Hook-Systeme erfolgen kann. Eine quasistatische Lageregulierung erfolgt beispielsweise für die Einstellung der Leuchtweite oder für den Fall einer Anhängerbeladung bzw. einer einseitigen Beladung durch Anhebung des Fahrwerks auf ein vorgegebenes Niveau. Allgemein können sowohl auf quasistatischer oder statischer Ebene als auch auf dynamischer Ebene Wank-, Nick- und Hubbewegungen ausgeglichen werden. Gegebenenfalls ist auch ein Ausgleich von Gierbewegungen möglich.

Als berührungslos arbeitende Sensoren können Ultraschallsensoren, Radarsensoren, Lidarsensoren oder Videosensoren eingesetzt werden. Aufgrund der Verschmutzungsunempfindlichkeit und der guten Messgenauigkeit werden Radarsensoren bevorzugt, die im Übrigen auch nicht durch Umwelteinflüsse wie Schnee, Regen, Sand oder dergleichen negativ beeinflusst werden. Verwendung finden insbesondere Nahbereichsradare in einem Frequenzbereich zwischen 77 GHz und 81 GHz. Mit der Bandbreite von 4 GHz kann eine Auflösung von 3.75 cm erreicht werden, d.h. Ziele in diesem Abstand können noch unterschieden werden, was eine Unterscheidung von Radfelge und Boden und eine entsprechende Abstandsmessung zwischen dem Ort der Sensoranordnung am Fahrwerksboden und der Radfelge bzw. dem Boden ermöglicht. Die Messgenauigkeit erfolgt mit einer um den Faktor 100 höheren Genauigkeit, was zu einer absoluten Genauigkeit von etwa 0.4 mm führt.

Die Messzeit beträgt beispielsweise 10 ms, der Winkelbereich, innerhalb dem eine Detektion erfolgt, ist beispielhaft auf 0.02° beschränkt.

Eine Winkelkorrektur kann durchgeführt werden, indem die Sensoren die Höhenänderungen des Chassis bzw. Fahrwerks in Bezug zum Untergrund des Fahrzeugs sowohl auf der rechten als auch auf der linken Fahrzeugseite detektieren. Unerwünschte Wankbewegungen können über entgegengesetzt gerichtete Aktuatorbewegungen auf der linken und rechten Fahrzeugseite ausgeregelt werden.

Bei einer Nickwinkelkorrektur werden über die in Fahrzeuglängsrichtung beabstandeten Sensoranordnungen gleichzeitige Höhenänderungen des Chassis in Bezug zum Untergrund am Vorderwagen und am Hinterwagen detektiert, wobei ein Ausgleich wiederum über entgegengesetzt gerichtete Aktuatorbewegungen am Vorder- und Hinterwagen erfolgt.

Eine Niveauregulierung erfolgt allgemein bei Beladungszustandsänderungen des Fahrzeugs, die eine Höhenänderung zur Folge haben. Zusätzlich oder alternativ zur Anhebung auf das gewünschte Niveau kann auch eine Warnung bei Überladung oder Schiefbeladung erfolgen. Gleiches gilt für sensierte Neigungen des Fahrwerks. Gegebenenfalls kann als Maßnahme auch eine automatische Geschwindigkeitsanpassung durchgeführt werden, insbesondere eine Geschwindigkeitsreduktion.

Eine Fahrwerkregelung kann in schneller und sehr präziser Weise durchgeführt werden, da die mit der Sensoranordnung ermittelten Höhenmessungen einen Rückschluss auf eventuelle Fahrbahnunebenheiten erlauben, wobei im Vergleich zu Messmethoden aus dem Stand der Technik eine höhere Präzision der Messdaten und dementsprechend auch eine präzisere Einstellung des Fahrwerks gegeben bzw. möglich ist. Darüber hinaus kann für den Fall einer vorausschauenden Erkennung des vor den Rädern liegenden Untergrundes ein Hindernis oder eine Unebenheit noch vor dem Überfahren derselben detektiert werden, beispielsweise Steine, Löcher oder Bordsteine, woraufhin Vermeidungs- bzw. Ausweichmaßnahmen ergriffen werden können oder Anpassungen im Fahrwerk wie Veränderungen in der Dämpfungsrate des Feder-/Dämpfungssystems.

Ein weiterer Vorteil liegt in der Möglichkeit, auch über längere Zeiträume Effekte wie Alterungen von einzelnen Fahrzeugbauteilen feststellen zu können. Beispielsweise kann über eine Speicherung der Höhendaten eine Alterung der Stoßdämpfer erkannt werden, indem das Zeitverhalten der gemessenen Daten analysiert wird. Sofern Alterung oder eine sonstige langsam bzw. schleichend erfolgende Änderung im Verhalten eines Fahrzeugbauteils festgestellt wird, können entsprechende Informationen zur Anzeige gebracht oder für mögliche Gegenmaßnahmen im Fahrzeug herangezogen werden. Beispielsweise kann auch ein schleichender Druckverlust in einem Fahrzeugrad erkannt werden, ebenso Abnutzungen in Stoßdämpfern.

### Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine Draufsicht auf ein Fahrzeug mit insgesamt vier gleichartig aufge- bauten Sensoranordnungen auf der Fahrwerksunterseite, die jeweils einen berührungslos arbeitenden Abstandssensor umfassen, welcher sowohl den Abstand zwischen Fahrwerk und Boden, den Abstand zwi- schen dem Fahrwerk und der nächstliegenden Radfelge und auch den Abstand zu einem möglichen, voraus liegenden Hindernis ermittelt,
- Fig. 2: das Fahrzeug in einer Ansicht von vorne,
- Fig. 3: das Fahrzeug in einer Ansicht von hinten,
- Fig. 4: das Fahrzeug in Seitenansicht.

### Ausführungsbeispiel

Das in den Figuren dargestellte Kraftfahrzeug 1 weist auf der Unterseite des Fahrwerks 2 insgesamt vier verteilt angeordnete Sensoranordnungen 3 auf, die im vorderen linken, vorderen rechten, hinteren linken und hinteren rechten Bereich des Fahrzeuges platziert sind. Die Sensoranordnungen 3 umfassen ausschließlich berührungslos arbeitende Abstandssensoren 4, die zur Wegmessung ausgebildet sind. Jeder Sensoranordnung 3 ist zweckmäßig genau ein Abstandssensor 4 zugeordnet. Bei den berührungslos messenden Abstandssensoren handelt es sich insbesondere um Radarsensoren; es kommen aber auch Lasersensoren, Ultraschallsensoren, Lidarsensoren oder Sensoren auf Videobasis in Betracht. Beim Einsatz von Sensoren auf Radarbasis wird insbesondere ein Nahbereichsradar verwendet. Die verteilt platzierten Sensoranordnungen 3 sind untereinander identisch aufgebaut. Zweckmäßig sind zumindest drei derartige Sensoranordnungen auf der Fahrwerksunterseite vorgesehen; es können darüber hinaus aber auch mehr als die vier dargestellten Sensoranordnungen vorgesehen sein, beispielsweise sechs verteilt platzierte Sensoranordnungen 3. Auch kann die Position der Sensoranordnungen 3 an der Fahrwerksunterseite variiert werden, beispielsweise kann auch in der Fahrzeugmitte - sowohl in Längsrichtung als auch in Querrichtung gesehen - eine Sensoranordnung vorgesehen sein. Für ein ordnungsgemäßes Funktionieren und Zusammenwirken der von den einzelnen Sensoranordnungen gelieferten Sensorsignale ist jedoch ein möglichst großer Abstand zwischen den Sensoranordnungen sowohl in Längsrichtung als auch in Querrichtung vorteilhaft, um die Genauigkeit der Winkelberechnung insbesondere bei einer Neigung des Fahrzeuges um die Querachse und um die Längsachse zu verbessern.

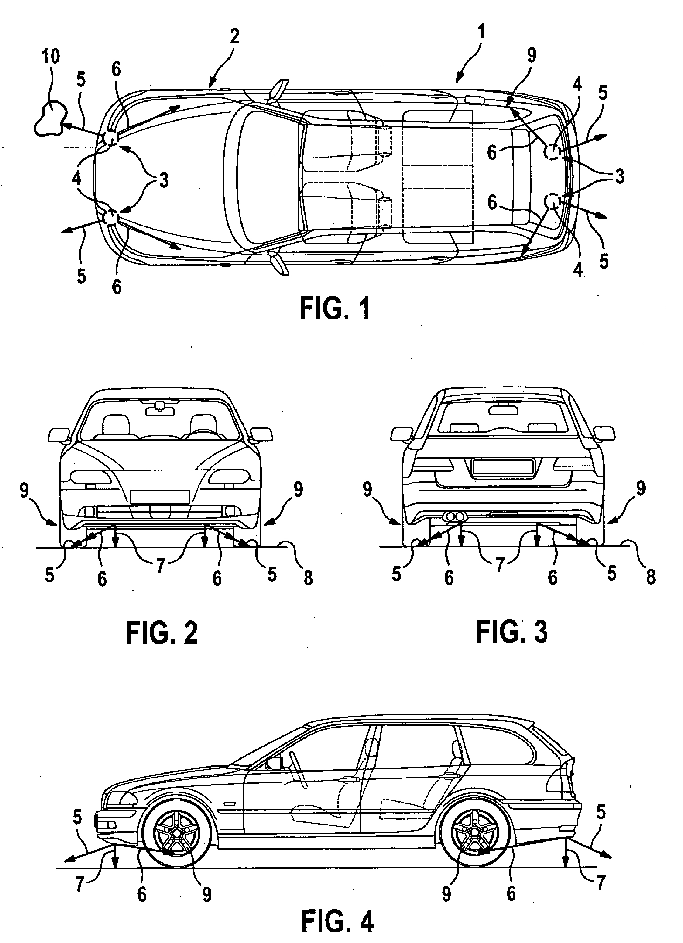

Über die ausschließlich Weg messenden Abstandssensoren 4, die auf der Fahrwerksunterseite platziert sind, ist der Abstand zwischen der jeweiligen Position des Abstandssensors und dem in Richtung des erzeugten Abtaststrahls liegenden Hindernis zu ermitteln. Zweckmäßig werden mithilfe eines Strahlteilers zumindest zwei, insbesondere aber drei Abtaststrahlen 5, 6 und 7 mit jeweils nur einem Abstandssensor 4 generiert, von denen der Abtaststrahl 5 bei den vorderen Sensoranordnungen 3 nach vorne gerichtet ist und über die Fahrzeugvorderseite hinaus reicht und, wie in Fig. 1 dargestellt, beispielhaft ein auf dem Boden liegendes Hindernis 10 detektieren kann, beispielsweise ein Stein oder auch eine Bordsteinkante. Bei den hinteren, im Heckbereich des Fahrzeugs angeordneten Sensoranordnungen 3 ist der Hindernis-Abtaststrahl 5 nach hinten gerichtet und reicht über die Heckkante des Fahrzeuges hinaus, um auf dem Boden liegende Hindernisse bei Rückwärtsfahrt abtasten zu können. Die Hindernis-Abtaststrahlen 5 verlaufen näherungsweise in Fahrzeuglängsrichtung, können jedoch mit der Fahrzeuglängsachse einen kleinen Winkel von ca. bis zu 20° einschließen, wobei im linken und rechten Fahrzeugbereich angeordnete Abstandssensoren 4 in Richtung zur jeweils benachbarten Fahrzeugseite angewinkelt sind.

Mit dem weiteren Abtaststrahl 6, der vom Strahlteiler des Abstandssensors 4 generiert wird, kann der Abstand zwischen dem Fahrwerk und der jeweils nächstliegenden Radfelge 9 detektiert werden. Über den Radfelgen-Abtaststrahl 6 ist somit die Relativbewegung zwischen jedem Rad und dem Fahrwerk 2 ermittelbar.

Mit dem dritten Abtaststrahl 7 kann der Abstand zwischen dem Fahrwerk 2 und dem Boden 8 ermittelt werden. Der Boden-Abtaststrahl 7 verläuft zweckmäßig vertikal nach unten, wohingegen der Radfelgen-Abtaststrahl 6 räumlich verläuft, d.h. eine Komponente in Fahrzeuglängsrichtung, -querrichtung und in vertikaler Richtung aufweist. Auch der Hindernis-Abtaststrahl 5 besitzt im Fahrzeug-Koordinatensystem eine Komponente in x-, y- und z-Richtung.

Die aus den Abtaststrahlen 5, 6 und 7 gewonnenen Messsignale jeder Sensoranordnung 3 werden einer im Fahrzeug angeordneten Regel- und Steuereinheit zugeführt, in der aus den gewonnenen Wegsignalen unter Berücksichtigung der Fahrzeuggeometrie die Werte für die Eintauchbewegung in Vertikalrichtung sowie Nick- und Wankwinkelwerte sowie ggf. auch der Gierwinkel berechnet werden. Unter Berücksichtigung des zeitlichen Verlaufs können mit bekannten rechnerischen Methoden auch korrespondierende Werte auf Geschwindigkeits- und Beschleunigungsebene ermittelt werden. Über eine Langzeitbetrachtung der Messreihen können darüber hinaus Alterungsprozesse beispielsweise in den Feder-/Dämpfersystemen erkannt werden.

Als zu ergreifende Maßnahmen kommen sowohl Eingriffe in das Motormanagement und die Ansteuerung von Aktuatoren im Fahrzeug, insbesondere im Fahrwerk sowie Eingriffe in Bremsregelsysteme in Betracht als auch die Beeinflussung von sonstigen, sicherheitsrelevanten Funktionen, beispielsweise die Scheinwerferregulierung, die Reifendruckregulierung oder auch Komfortfunktionen, beispielsweise das Nachstellen des Spiegels oder der Sitzposition.

Weiterhin umfasst die Erfindung ein Verfahren zur Lageregulierung des Fahrwerks eines Kraftfahrzeugs. Bei diesem Verfahren wird das Fahrwerk über Stellsignale einer Regel- und Steuereinheit in Abhängigkeit von Sensorsignalen von Abstandssensoren eingestellt, über die die Position des Fahrwerks oder eines mit dem Fahrwerk verbundenen Bauteils erfasst wird. Hierfür werden an mindestens drei beabstandeten Positionen an der Fahrzeugunterseite berührungslos Wegmessungen durchgeführt, wobei an jeder dieser Positionen mindestens zwei Wegmessungen in verschiedene Richtungen durchgeführt werden. Eine Fahrwerkseinstellung wird für den Fall durchgeführt, dass die gemessenen Sensorsignale von vorgegebenen Sollwerten abweichen. Des weiteren ist ein Steuergerät zur Durchführung des Verfahrens vorgesehen.

## Patentansprüche

1. System zur Lageregulierung des Fahrwerks eines Kraftfahrzeugs, mit an dem Fahrwerk (2) angeordneten Aktuatoren, die über Stellsignale einer Regel- und Steuereinheit einzustellen sind, mit einem Abstandssensor (4) zur Erfassung der Position des Fahrwerks (2) oder einem mit dem Fahrwerk (2) verbundenen Bauteil, wobei eine Einstellung eines Aktuators durchführbar ist, falls die gemessenen Sensorsignale des Abstandssensor (4) von vorgegebenen Sollwerten abweichen,
**dadurch gekennzeichnet,**
**dass** an der Fahrzeugunterseite an mindestens drei beabstandeten Positionen jeweils eine Weg messende Sensoranordnung (3) mit einem berührungslos arbeitenden Abstandssensor (4) angeordnet ist und über jeden Abstandssensor (4) zumindest zwei Wegmessungen in verschiedene Richtungen (5, 6, 7) durchführbar sind,
**dass** die Sensoranordnungen (3) benachbart zu den Fahrzeugrädern angeordnet sind und
**dass** jedem Fahrzeugrad eine Sensoranordnung (3) zugeordnet ist,
wobei über jeden Abstandssensor (4) der Abstand zwischen dem Fahrwerk (2) und dem Boden (8) und/oder zwischen dem Fahrwerk (2) und einer Radfelge (9) ermittelbar ist.

2. System nach einem der Ansprüche 1,
**dadurch gekennzeichnet,**
**dass** über jeden Abstandssensor (4) der Abstand zu einem vor dem Abstandssensor liegenden Hindernis (10) ermittelbar ist.

3. System nach einem der Ansprüche 1 bis 2,
**dadurch gekennzeichnet,**
**dass** die Abstandssensoren (4) jeweils eine Sende-/Empfangseinheit und einen Strahlteiler zur Erzeugung von mindestens zwei zueinander einen Winkel einschließenden Abtaststrahlen (5, 6, 7) aufweisen.

4. System nach Anspruch 3,
**dadurch gekennzeichnet,**
**dass** als Strahlteiler in der Sensoranordnung ein Phasensteuerglied eingesetzt wird.

5. System nach Anspruch 4,
**dadurch gekennzeichnet,**
**dass** als Strahlteiler in der Sensoranordnung eine Linsengeometrie eingesetzt wird.

6. System nach einem der Ansprüche 1 bis 5,
**dadurch gekennzeichnet,**
**dass** im Falle einer Abweichung der gemessenen Sensorsignale des Abstandssensors (4) von den Sollwerten eine quasistatische Lageregulierung eines Fahrzeugbauteils durchgeführt wird.

7. System nach einem der Ansprüche 1 bis 6,
**dadurch gekennzeichnet,**
**dass** im Falle einer Abweichung der gemessenen Sensorsignale des Abstandssensor (4) von den Sollwerten eine dynamische Lageregulierung eines Fahrzeugbauteils durchgeführt wird.

8. System nach einem der Ansprüche 1 bis 7,
**dadurch gekennzeichnet,**
**dass** als Sensorsignal ein Nahbereichsradar eingesetzt wird.

9. Verfahren zur Lageregulierung des Fahrwerks eines Kraftfahrzeugs, insbesondere Verfahren zum Betrieb des Systems nach einem der Ansprüche 1 bis 8, bei dem das Fahrwerk (2) über Stellsignale einer Regel- und Steuereinheit in Abhängigkeit von Sensorsignalen eines Abstandssensors (4) einzustellen ist, über den die Position des Fahrwerks (2) oder eines mit dem Fahrwerk (2) verbundenen Bauteils erfasst wird, wobei eine Einstellung des Fahrwerks (2) durchgeführt wird, falls die gemessenen Sensorsignale von vorgegebenen Sollwerten abweichen, **dadurch gekennzeichnet,**
**dass** an mindestens drei beabstandeten Positionen an der Fahrzeugunterseite mittels Sensoranordnungen berührungslos Wegmessungen durchgeführt werden, wobei an jeder Position mindestens zwei Wegmessungen in verschiedene Richtungen (5, 6, 7) durchgeführt werden,
**dass** die Sensoranordnungen (3) benachbart zu den Fahrzeugrädern angeordnet sind und
**dass** jedem Fahrzeugrad eine Sensoranordnung (3) zugeordnet ist,
wobei über jeden Abstandssensor (4) der Abstand zwischen dem Fahrwerk (2) und dem Boden (8) und/oder zwischen dem Fahrwerk (2) und einer Radfelge (9) ermittelbar ist.

## Claims

1. System for regulating the position of the chassis of a motor vehicle, having actuators which are arranged on the chassis (2) and which can be set by means of actuation signals of a closed-loop and open-loop control unit, having a distance sensor (4) for detecting the position of the chassis (2) or a component which is connected to the chassis (2), wherein setting of an actuator can be performed if the measured sensor signals of the distance sensor (4) deviate from predefined setpoint values,
**characterized**
**in that** a travel-measuring sensor arrangement (3) with a distance sensor (4) which operates in a contactless fashion is arranged at each of at least three spaced-apart positions on the underside of the vehicle, and at least two travel measurements can be carried out in different directions (5, 6, 7) by means of each distance sensor (4),
**in that** the sensor arrangements (3) are arranged adjacent to the vehicle wheels, and
**in that** a sensor arrangement (3) is assigned to each vehicle wheel,
wherein the distance between the chassis (2) and the ground (8) and/or between the chassis (2) and a wheel rim (9) can be determined by means of each distance sensor (4).

2. The system as claimed in Claim 1,
**characterized**
**in that** the distance from an obstacle (10) located in front of the distance sensor can be determined by means of each distance sensor (4).

3. System according to one of Claims 1 to 2,
**characterized**
**in that** the distance sensors (4) each have a transceiver unit and a beam splitter for generating at least two scanning beams (5, 6, 7) which enclose an angle with respect to one another.

4. System according to Claim 3,
**characterized**
**in that** a phase control element is used as the beam splitter in the sensor arrangement.

5. System according to Claim 4,
**characterized**
**in that** a lens geometry is used as a beam splitter in the sensor arrangement.

6. System according to one of Claims 1 to 5,
**characterized**
**in that** quasi-static position regulation of a vehicle component is carried out if the measured sensor signals of the distance sensor (4) deviate from the setpoint values.

7. System according to one of Claims 1 to 6,
**characterized**
**in that** dynamic position regulation of a vehicle component is carried out if the measured sensor signals of the distance sensor (4) deviate from the setpoint values.

8. System according to one of Claims 1 to 7,
**characterized**
**in that** a close-range radar is used as the sensor signal.

9. Method for regulating the position of the chassis of a motor vehicle, in particular a method for operating the system according to one of Claims 1 to 8, in which the chassis (2) can be set as a function of sensor signals of a distance sensor (4) by means of actuation signals of a closed-loop and open-loop control unit, by means of which distance sensor (4) the position of the chassis (2) or of a component which is connected to the chassis (2) is detected, wherein the setting of the chassis (2) is performed if the measured sensor signals deviate from predefined setpoint values,
**characterized**
**in that** travel measurements are carried out in a contactless fashion at at least three spaced-apart positions on the underside of the vehicle by means of sensor arrangements, wherein at least two travel measurements are performed in different directions (5, 6, 7) at each position,
**in that** the sensor arrangements (3) are arranged adjacent to the vehicle wheels, and
**in that** a sensor arrangement (3) is assigned to each vehicle wheel,
wherein the distance between the chassis (2) and the ground (8) and/or between the chassis (2) and a wheel rim (9) can be determined by means of each distance sensor (4).

## Revendications

1. Système de régulation de la position du train de roulement d'un véhicule automobile, présentant
des actionneurs disposés sur le train de roulement (2) et qui peuvent être réglés par les signaux de réglage d'une unité de régulation et de commande,
un détecteur de distance (4) qui détecte la position du train de roulement (2) ou d'un composant relié au train de roulement (2),
un actionneur pouvant être activé au cas où les signaux de détection mesurés du détecteur de distance (4) s'écartent de valeurs de consigne prédéterminées, **caractérisé en ce que**
un système de détection (3) qui mesure une distance est disposé sur le côté inférieur du véhicule en au moins trois positions situées à distance les unes des autres à l'aide d'un détecteur de distance (4) travaillant sans contact,
**en ce qu'**au moins deux mesures de distance peuvent être exécutées dans des directions différentes (5, 6, 7) par chaque détecteur de distance (4),
**en ce que** les systèmes de détection (3) sont disposés au voisinage des roues du véhicule,
**en ce qu'**un système de détection (3) est associé à chaque roue du véhicule et
**en ce que** chaque détecteur de distance (4) permet de déterminer la distance entre le train de roulement (2) et le sol (8) et/ou entre le train de roulement (2) et une jante de roue (9).

2. Système selon la revendication 1, **caractérisé en ce que** chaque détecteur de distance (4) permet de déterminer la distance par rapport à un obstacle (10) situé en avant du détecteur de distance.

3. Système selon l'une des revendications 1 et 2, **caractérisé en ce que** les détecteurs de distance (4) présentent tous une unité d'émission et de réception et un diviseur de faisceau en vue de former au moins deux faisceaux de palpage (5, 6, 7) qui forment un angle entre eux.

4. Système selon la revendication 3, **caractérisé en ce que** comme diviseur de faisceau, le système de détection utilise un organe de commande de phase.

5. Système selon la revendication 4, **caractérisé en ce que** comme diviseur de faisceau, le système de détection utilise une géométrie de lentille.

6. Système selon l'une des revendications 1 à 5, **caractérisé en ce qu'**une régulation de position quasi statique d'un composant du véhicule est exécutée au cas où les signaux mesurés du détecteur de distance (4) présentent un écart par rapport à des valeurs de consigne.

7. Système selon l'une des revendications 1 à 6, **caractérisé en ce qu'**une régulation dynamique de la position d'un composant du véhicule est exécutée au cas où les signaux mesurés du détecteur de distance (4) présentent un écart par rapport à des valeurs de consigne.

8. Système selon l'une des revendications 1 à 7, **caractérisé en ce que** comme signal de détection, il utilise un radar de proximité.

9. Procédé de régulation de la position du train de roulement d'un véhicule automobile, et en particulier procédé en vue de la conduite du système selon l'une des revendications 1 à 8, dans lequel le train de roulement (2) doit être ajusté par des signaux de réglage d'une unité de régulation et de commande en fonction des signaux d'un détecteur de distance (4) par lequel la position du train de roulement (2) ou d'un composant relié au train de roulement (2) est détectée,
un ajustement du train de roulement (2) étant exécuté au cas où les signaux de détection mesurés s'écartent de valeurs de consigne prédéterminées, **caractérisé en ce que**
des mesures de distance sont exécutées sans contact au moyen de systèmes de détection en au moins trois positions du côté inférieur du véhicule situées à distance les unes des autres,
**en ce qu'**au moins deux mesures de distance sont exécutées dans des directions différentes (5, 6, 7) en chaque position,
**en ce que** les systèmes de détection (3) sont disposés au voisinage des roues du véhicule,
**en ce qu'**à chaque roue du véhicule est associé un système de détection (3) et
**en ce que** la distance entre le train de roulement (2) et le sol (8) et/ou entre le train de roulement (2) et une jante de roue (9) peut être déterminée par chaque détecteur de distance (4).
